# EUROPÄISCHE PATENTSCHRIFT

(11) **EP 2 873 126 B1**
(45) Veröffentlichungstag und Bekanntmachung des Hinweises auf die Patenterteilung: **01.07.2020**
(21) Anmeldenummer: 13753829.4
(22) Anmeldetag: 09.08.2013
(51) Int. Cl.: H02B 13/035

(54) **GASISOLIERTE SCHALTANLAGE**
GAS-INSULATED SWITCHGEAR
INSTALLATION DE COMMUTATION À ISOLATION GAZEUSE

(30) Priorität: 28.08.2012 DE 102012215246
(43) Veröffentlichungstag der Anmeldung: 20.05.2015
(73) Patentinhaber: Siemens Aktiengesellschaft, 80333 München (DE)
(72) Erfinder: GRONBACH, Peter, 90429 Nürnberg (DE); NAST, Peter, 30657 Hannover (DE); WAHLE, Arno, 14612 Falkensee (DE)
(86) Internationale Anmeldenummer: PCT/EP2013/066737
(87) Internationale Veröffentlichungsnummer: WO 2014/032943

(56) Entgegenhaltungen:
- DE-A1- 2 108 266
- DE-A1- 2 733 777
- DE-A1- 3 313 192
- DE-A1- 3 715 105
- FR-A- 1 438 683
- FR-A1- 2 259 459
- FR-A1- 2 558 013
- GB-A- 1 573 713
- US-A- 3 522 404

## Beschreibung

Die Erfindung bezieht sich auf ein druckfluidisoliertes Schaltfeld aufweisend einen hohlvolumigen zumindest abschnittsweise im Wesentlichen hohlzylindrisch geformten Druckbehälter, welcher in seinem Innern eine Schalteinrichtung, insbesondere eine Leistungsschalteinrichtung aufnimmt sowie eine erste Durchführungsanordnung und eine zweite Durchführungsanordnung zur Einbindung der Schalteinrichtung in einen Strompfad, wobei zumindest die erste, insbesondere die erste und die zweite Durchführungsanordnung mantelseitig am im Wesentlichen hohlzylindrischen Abschnitt des Druckbehälters angeordnet ist/sind, wobei die erste und die zweite Durchführungsanordnung einen Steckverbinder aufweisen, und die Durchführungsanordnungen einen Phasenleiter fluiddicht elektrisch isoliert durch eine Barriere des Druckbehälters führend, an einem Flanschdeckel abgestützt sind.

Ein druckfluidisoliertes Schaltfeld ist beispielsweise aus der Offenlegungsschrift DE 100 14 680 A1 bekannt. Das dortige druckfluidisolierte Schaltfeld ist mit einem Druckbehälter ausgestattet, in dessen Inneren eine Schalteinrichtung angeordnet ist. Bei der bekannten Anordnung ist die Verwendung einer Leistungsschalteinrichtung vorgeschlagen. Weiterhin sind eine erste Durchführungsanordnung sowie eine zweite Durchführungsanordnung vorgesehen, um die Schalteinrichtung in einen Strompfad einzubinden.

Als Durchführungsanordnungen sind bei der bekannten Ausgestaltung Freiluftdurchführungen eingesetzt. Die Freiluftdurchführungen sind besonders geeignet, um unter Freiluftbedingungen eine kostengünstige Einbindung der Schalteinrichtung in eine Freileitung eines Elektroenergieübertragungsnetzes vorzunehmen.

Insbesondere bei beengten Platzverhältnissen oder widrigen Umgebungsbedingungen, beispielsweise verschmutzter Luft oder salzhaltiger Atmosphäre, wie in etwa in der Nähe von Meeren, erweist sich die Verwendung von Freiluftdurchführungen als problematisch. Auf Oberflächen der bekannten Freiluftdurchführungen sind zwar kriechwegverlängernde Beschirmungen vorgesehen, jedoch ist bei starker Kontamination der Umgebungsatmosphäre eine Ablagerung von Fremdpartikeln nicht zu verhindern. So können beispielsweise salzhaltige Krusten, Rußablagerungen oder Staub die Wirksamkeit der Beschirmung reduzieren, so dass sich an der Oberfläche einer Freiluftdurchführung elektrisch leitfähigen Bahnen ergeben können, welche als Kurzschlussbrücke wirken.

Entsprechend ist die bekannte Anordnung für den Einsatz unter erschwerten Ummgebungsbedingungen nur bedingt geeignet.

Aus der DE 37 15 105 A1 geht eine elektrische Vorrichtung hervor, an welcher eine Abdeckung zur Montage von Durchführungen dient. Aus der DE 21 08 266 ist ein Hochspannungsschalter bekannt, an welchem innerhalb eines Metallgehäuses Steckverbinder für einen Leiter angeordnet sind. Die DE 33 13 192 A1 beschreibt eine gekapselte Schaltanlage, welche mittels eines Abschlussteiles ein mit Isolierstoff ausgekleidetes Formteil verschließt.

Aus den Dokumenten FR 2 259 459, FR 1 438 683 und FR 2 558 013 sind jeweils Schaltfelder bekannt, die einen hohlvolumigen Druckbehälter aufweisen. Die bekannten Schaltfelder sind mit Durchführungsanordnungen ausgestattet, die Steckverbinder aufweisen, wobei die Durchführungsanordnungen jeweils individuell in eine Wandung des dortigen hohlvolumigen Druckbehälters eingesetzt sind. Der Offenlegungsschrift DE 27 33 777 ist ein Schaltfeld entnehmbar, welches im Wesentlichen hohlzylindrisch ausgeformt und als Druckbehälter genutzt ist. Auch bei der dortigen Struktur ist vorgesehen, mantelseitig jeweils Durchführungsanordnungen mit Steckverbindern anzuordnen, wobei jede der Durchführungsanordnungen individuell in einer Wandung des Druckbehälters positioniert ist. Insbesondere bei der Nutzung von höheren Drücken sind an dem bekannten Schaltfeld entsprechend Verstärkungen vorzusehen, um ein Verformen von Wandungen des Schaltfeldes entgegenzuwirken.

Der Patent Specification GB 1 573 713 ist ein Hochspannungsschaltgerät entnehmbar, welches die Verwendung von Freiluftdurchführungen vorsieht, welche jeweils individuell an einem Gehäuse des Schaltgerätes positioniert sind.

Ein individuelles Positionieren von Durchführungsanordnungen ermöglicht eine individuelle Anpassung von Schaltfeldern. Es können Ausführungsvarianten in großer Zahl generiert werden, wobei die Kosten für ein individuelles Anpassen vergleichsweise hoch sind.

Somit ergibt sich als Aufgabe der Erfindung, ein druckfluidisoliertes Schaltfeld anzugeben, welches bei kostengünstigen Gestehungskosteneinen modularen Aufbau unterstützt.

Erfindungsgemäß wird die Aufgabe, bei einem druckfluidisolierten Schaltfeld der eingangs genannten Art dadurch gelöst, dass an der ersten Durchführungsanordnung ein erster Winkelstecker und an der zweiten Durchführungsanordnung ein zweiter Winkelstecker angesetzt sind, welche jeweils ein Kabel abschließen, wobei die abgeschlossenen Kabel im Wesentlichen aus entgegengesetzten Richtungen auf den jeweiligen Winkelstecker zulaufen und eine Zylinderachse des im Wesentlichen hohlzylindrischen Abschnittes des Druckbehälters im Wesentlichen in einer Vertikalen liegt und Kabel aus im Wesentlichen vertikalen Richtungen in Winkelsteckern münden.

Ein druckfluidisoliertes Schaltfeld weist einen Druckbehälter auf, der im Inneren mit einem Isolationsmedium befüllt ist, welches gegenüber der Umgebung einen Überdruck aufweist. Das elektrisch isolierende Medium kann beispielsweise ein Gas oder eine Flüssigkeit sein. Als elektrisch isolierende Gase eignen sich insbesondere Schwefelhexafluorid, Stickstoff sowie Gemische mit diesen Gasen. Hohlvolumige Druckbehälter sollten vorzugsweise im Wesentlichen rohrförmig hohlzylindrisch ausgeformt sein, wobei der Druckbehälter bevorzugt einen annähernd kreisringförmigen Querschnitt aufweisen sollte. Stirnseitig ist der zumindest abschnittsweise im Wesentlichen hohlzylindrisch geformte Druckbehälter verschlossen, so dass das Innere des Druckbehälters hermetisch von der Umgebung abgetrennt ist. Um im Inneren des Druckbehälters befindliche Elemente, beispielsweise die Schalteinrichtung elektrisch kontaktieren zu können, muss der Druckbehälter gas- bzw. flüssigkeitsdicht von zumindest einer Durchführungsanordnung gequert sein. Mittels der Durchführungsanordnung ist ein elektrisch isoliertes und dielektrisch sicheres Hindurchleiten eines Phasenleiters durch die Wandung des Druckbehälters ermöglicht. Über den/die Phasenleiter ist ein elektrisches Kontaktieren der Schalteinrichtung vorgesehen. Die Barrierewirkung des Druckbehälters ist weiterhin aufrechterhalten, so dass eine hermetische Kapselung vorliegt. Insbesondere bei der Verwendung von Druckbehältern, welche elektrisch leitfähig ausgebildet sind, beispielsweise Druckbehälter aus Metallen, insbesondere Aluminiumguss ist ein elektrisch isoliertes Führen eines Phasenleiters innerhalb der Durchführungsanordnung nötig. Mittels der über die Durchführungsanordnung eingeführten Phasenleiter ist es möglich, die innerhalb des Druckbehälters befindliche Schalteinrichtung in einen Strompfad einzubinden, so dass der durch die Phasenleiter zumindest abschnittsweise gebildete Strompfad über die Schalteinrichtung unterbrochen bzw. durchgeschaltet werden kann. Somit ist es möglich, mittels der Schalteinrichtung den Strompfad zu öffnen bzw. zu schließen. Die in den Durchführungsanordnungen geführten Phasenleiter dienen jeweils einem Kontaktieren der jeweiligen Kontaktierungsseite, die sich beiderseits einer Schaltstrecke der Schalteinrichtung erstrecken. Insbesondere kann vorgesehen sein, dass die Durchführungen mantelseitig am hohlzylindrischen Abschnitt des Druckbehälters angeordnet sind, wobei sich die Schalteinrichtung beispielsweise im Wesentlichen längs einer Zylinderachse des im Wesentlichen hohlzylindrischen Abschnittes erstreckt. Entsprechend kann bei einer mantelseitigen Anordnung beider Durchführungsanordnungen ein axialer Versatz der Durchführungsanordnungen vorgesehen sein, wobei die Durchführungsanordnungen im Wesentlichen fluchtend angeordnet sind. Die zweite Durchführungsanordnung kann gleichartig zur ersten Durchführungsanordnung ausgeführt sein. Es kann jedoch auch eine alternative Ausformung der zweiten Durchführungsanordnung Verwendung finden. Beispielsweise kann die zweite Durchführungsanordnung als Freiluftdurchführung ausgeführt sein.

Dabei kann vorgesehen sein, dass druckfluidisolierte Schaltfeld einphasig isoliert oder mehrphasig isoliert ausgeführt ist. Das heißt bei einer mehrphasig ausgeführten Isolation sind innerhalb des Druckbehälters mehrere Phasenleiter elektrisch isoliert voneinander angeordnet, so dass das druckfluidisolierte Schaltfeld beispielsweise zum Schalten eines Strompfades eines mehrphasigen Elektroenergieübertragungssystems eingesetzt werden kann. Die einzelnen Phasen sowie die einzelnen Phasenleiter sowie die einzelnen Schaltstellen der mehrphasigen Schalteinrichtung sind gegeneinander elektrisch isoliert.

Es kann jedoch auch vorgesehen sein, dass eine einphasig isolierte Ausführung des druckfluidisolierten Schaltfeldes vorgesehen ist, wobei dabei mehrere separate Druckbehälter zur Verwendung kommen, die im Wesentlichen gleichartig aufgebaut sind, wobei in jedem der Druckbehälter nur eine Phase angeordnet ist. So kann es beispielsweise vorgesehen sein, dass zur Übertragung bzw. zur Einbindung des druckfluidisolierten Schaltfeldes in ein mehrphasiges Elektroenergieübertragungssystems mehrere Druckbehälter Verwendung finden. Alternativ kann auch vorgesehen sein, dass das druckfluidisolierte Schaltfeld lediglich in einem einphasigen System beispielsweise einem Gleichstromübertragungssystem zum Einsatz kommt.

Eine Ausgestaltung der Durchführungsanordnung bzw. der Durchführungsanordnungen als Steckverbinder gestattet es, ein unmittelbares Anschließen von Phasenleitern eines Elektroenergieübertragungssystems an dem druckfluidisolierten Schaltfeld vorzunehmen. Die Steckverbinder können beispielsweise mehrfach getrennt oder wieder verbunden werden, so dass ein flexibles Einsetzen des druckfluidisolierten Schaltfeldes möglich ist. Über die Steckverbinder finden Kabel Verwendung zur Zuführung der Phasenleiter zum Einbinden des druckfluidisolierten Schaltfeldes in einen Strompfad. Die Steckverbinder können beispielsweise als außenkonische Steckverbinder ausgebildet sein. D. h. aus einer Fläche ragt ein Steckkonus hervor, welcher insbesondere elektrisch isolierend einen Phasenleiter umgreift, wobei auf diesen Steckverbinder ein entsprechender Stecker mit gegengleich geformten Innenkonus aufsetzbar ist, welcher einem elektrischen Kontaktieren eines Phasenleiters eines Kabels mit einem Phasenleiter des druckfluidisolierten Schaltfeldes dient. Die Phasenleiter von Kabel und Schaltfeld können miteinander verschraubt, verpresst, vernietet, ineinander gesteckt etc. sein. Der bevorzugt als Außenkonus ausgeführte Steckkonus des Steckverbinders sowie der gegengleiche Innenkonus des Steckers sind ineinander gesteckt.

Der Stecker umgreift den Steckverbinder/ den Steckkonus. Die Feststoffisolation der Durchführung wird von dem Stecker bevorzugt umgriffen, so dass ein feststoffisolierter Übergang zu einem im Stecker mündenden Kabel hergestellt ist. Der Stecker sollte bevorzugt nach Art eines Überwurfes einen Steckverbinder umgreifen und überdecken, so dass ein direkter Zugang zu dem Steckverbinder durch den Stecker verhindert ist. Der Steckverbinder weist eine Steckachse auf, in deren Verlauf ein Aufsetzen bzw. Entfernen eines Steckers erfolgt. Außerhalb der Fluidisolation der druckfluidisolierten Schaltanlage sind die Phasenleiter des Strompfades bevorzugt feststoffisoliert ummantelt. Dies kann beispielsweise durch Verwendung von Kabeln sichergestellt sein. Ein Stecker schließt ein Kabel ab und steht in Eingriff mit einem Steckverbinder. Die Durchführungsanordnung mit Steckverbinder wirkt als Übergang von einer Fluidisolation auf eine Feststoffisolation. Je nach Ausgestaltung des druckfluidisolierten Schaltfeldes mit einphasiger oder mehrphasiger Isolation kann zu einer Durchführungsanordnung ein einziger Steckverbinder gehören oder es kann auch vorgesehen sein, dass mehrere Steckverbinder zu einer Durchführungsanordnung zugehörig sind, so dass mehrere Phasenleiter elektrisch isoliert über mehrere Steckverbinder der Durchführungsanordnung kontaktiert werden können. Beispielsweise kann vorgesehen sein, dass drei Steckverbinder parallel ausgerichtet zueinander linear fluchtend angeordnet sind. Es kann jedoch auch vorgesehen sein, dass beispielsweise parallel ausgerichtete Steckverbinder auf einer Kreisbahn liegend symmetrisch verteilt angeordnet sind. Insbesondere bei einer dreiphasigen Ausgestaltung des druckfluidisolierten Schaltfeldes ist eine so genannte Dreiecksanordnung der Steckverbinder einer Durchführungsanordnung von Vorteil. Die Steckverbinder liegen dann an den Eckpunkten eines gedachten Dreiecks, insbesondere eines gleichschenkligen oder gleichseitigen Dreiecks, wobei die Eckpunkte die Positionen des Hindurchführens der Phasenleiter durch eine Barriere des Druckbehälters markieren.

Die auf den Steckverbinder aufbringbaren Stecker ermöglichen eine vollständig feststoffisolierte Einhausung von Phasenleitern außerhalb des druckfluidisolierten Schaltfeldes (am Übergang zur Fluidisolation), wohingegen innerhalb des druckfluidisolierten Schaltfeldes ein fluides Medium vorliegt. Die Durchführungsanordnung bildet somit einen Abschnitt innerhalb der Barriere des Druckbehälters, an welchem ein Übergang von einer Feststoffisolation zu einer Fluidisolation gegeben ist. Innerhalb der fuiddichten Barriere ist zumindest abschnittsweise durch die Durchführungsanordnung ein elektrisch isolierender Bereich gebildet, welcher einem Durchsatz der fluiddichten Barriere des Druckbehälters durch anzuschließende Phasenleiter für die Schalteinrichtung dient. Durch die Verwendung einer Feststoffisolation außerhalb des fluidisolierten Schaltfeldes ist ein Ablagern von Verschmutzungen an der Oberfläche der auf die Steckverbinder aufgesetzten Stecker unkritisch, da im Verbund von Steckverbinder und Stecker eine vollständige Ummantelung der isolierten Phasenleiter gegeben ist. Die Steckverbinder werden dabei an ihrem Außenkonus vollumfänglich von den Winkelsteckern umgriffen und von diesen abgedeckt. Entsprechend schützt die äußere Kontur der aufgesetzten Stecker die Steckverbinder vor einem Verschmutzen. Die Phasenleiter von Steckverbinder und aufgesetztem Stecker kontaktieren einander. Die Phasenleiter können beispielsweise ineinander gesteckt, miteinander verschraubt, verpresst, vernietet usw. sein.

Eine weitere vorteilhafte Ausgestaltung kann vorsehen, dass an zumindest einer der Durchführungsanordnungen ein Steckverbinder mit einem Winkelstecker in Eingriff steht.

Zumindest eine, insbesondere sämtliche Steckverbindungen der Durchführungsanordnungen sollten mit einem Winkelstecker in Eingriff stehen. Ein Winkelstecker ermöglicht es, ein winkliges Ausleiten/Umlenken von Phasenleitern aus dem gasdruckfluidisolierten Schaltfeld vorzunehmen. Ein Winkelstecker lenkt den Verlauf eines Phasenleiters aus der Steckachse des Steckverbinders aus. So ist es möglich, auf großvolumige fluidgefüllte Module zu verzichten, die lediglich einem Umlenken eines Phasenleiters um beispielsweise 90° dienen. Die Winkelstecker hingegen stellen jeweils eine feststoffisolierte Umlenkung der den Druckbehälter linear durchsetzenden Phasenleitern dar. Über die Winkelstecker sind Kabel mit dem druckfluidisolierten Schaltfeld verbunden. Somit können die Kabel unmittelbar an dem Schaltfeld angesetzt werden, wobei bevorzugt Winkelstecker mit 90°-Lage zu verwenden sind, so dass ein am Winkelstecker mündendes Kabel bevorzugt parallel zur Zylinderachse eines hohlzylindrisch geformten Abschnittes des Druckbehälters ausgerichtet ist. Damit kann ein querschnittsarmes Schaltfeld aufgebaut werden, welches auch in beengten Raumverhältnissen aufgestellt werden kann.

Erfindungsgemäß, sind die Durchführungsanordnungen einen Phasenleiter fluiddicht elektrisch isoliert durch eine Barriere des Druckbehälters führend an einem Flanschdeckel abgestützt.

Die Anordnung einer Durchführungsanordnung an einem Flanschdeckel ist vorteilhaft, um flexible Dimensionen von Steckverbindern an einem Druckbehälter einsetzen zu können. Mittels eines Flanschdeckels wird ein Flansch, insbesondere ein mantelseitiger Flansch des Druckbehälters fluiddicht verschlossen. Ein Aufsetzen bzw. Durchsetzen eines Flanschdeckels mit einer Durchführungsanordnung ermöglicht es, verschiedenartige Durchführungsanordnungen an dem Schaltfeld anzusetzen. Der Flanschdeckel wirkt als Adapter. Je nach Bedarf können so verschiedene Dimensionen von Steckverbindern bzw. Winkelsteckern eingesetzt werden. Beispielsweise ist bei der Verwendung von Flanschdeckeln mit kreisringförmigem Querschnitt eine verteilte Anordnung mehrerer Phasen, insbesondere auf einer Kreisbahn von Vorteil. So kann in einfacher Weise ein kompakt bauendes Schaltfeld in dreiphasiger Isolation ausgeführt werden.

Gemäß der Erfindung, sind an der ersten Durchführungsanordnung ein erster Winkelstecker und an der zweiten Durchführungsanordnung ein zweiter Winkelstecker angesetzt welche jeweils ein Kabel abschließen, wobei die abgeschlossenen Kabel im Wesentlichen aus entgegengesetzten vertikalen Richtungen auf den jeweiligen Winkelstecker zulaufen.

Ein gegensinniges Anschließen von Kabeln an der ersten bzw. der zweiten Durchführungsanordnung ermöglicht es, das Schaltfeld beispielsweise an eine linear gestreckte Flucht auszurichten. Es ist vorgesehen, dass aus entgegengesetzten vertikalen Richtungen die Kabel auf die jeweiligen Winkelstecker zulaufen, wobei die Kabel im Wesentlichen parallel zur vertikaler Zylinderachse des hohlzylindrischen Abschnittes des Druckbehälters ausgerichtet sind, somit kann beispielsweise im Zug eines abzweigenden Kabels oder eines Kabelstiches/-abzweiges die Schalteinrichtung zum Schalten der Phasenleiter, welche innerhalb der Kabel geführt sind, eingesetzt werden. Dies ist insbesondere bei beengten Raumverhältnissen von Vorteil. Beispielsweise kann eine derartige Anordnung günstig in vertikalen Schächten oder Tunneln Verwendung finden, wobei das Schaltfeld mit den angeschlossenen Kabeln in Achsrichtung des Schachtes bzw. des Tunnels verlegt ist.

Eine weitere vorteilhafte Ausgestaltung kann vorsehen, dass die Schalteinrichtung eine Schaltstrecke aufweist, welche zwischen einer ersten Kontaktierungsseite und einer zweiten Kontaktierungsseite angeordnet ist, wobei die erste Durchführungsanordnung mit der ersten Kontaktseite schaltstellenfrei verbunden ist und die zweite Durchführungsanordnung mit der zweiten Kontaktseite schaltstellenfrei verbunden ist.

Eine Schalteinrichtung dient einem Herstellen eines Strompfades bzw. einem Unterbrechen eines Strompfades. Je nach Ausgestaltung und Funktion der Schalteinrichtung können unterschiedliche Leistungsmerkmale der Schalteinrichtung innewohnen. Beispielsweise kann die Schalteinrichtung als Leistungsschalteinrichtung ausgebildet sein, d. h. mittels der Schalteinrichtung ist ein Unterbrechen von Strömen im Nennstrombereich aber auch im Überstrombereich, beispielsweise von Kurzschlussströmen im Störungsfall ermöglicht. Die Schalteinrichtung weist eine Schaltstrecke auf, welche dem Herstellen eines elektrisch isolierenden Abschnittes im Verlauf des durch die Schalteinrichtung schaltbaren Strompfades dient. Beispielsweise können relativ zueinander bewegbare Schaltkontaktstücke Verwendung finden, wobei das eine Schaltkontaktstück auf einer ersten Kontaktierungsseite und das zweite Schaltkontaktstück auf einer zweiten Kontaktierungsseite angeordnet ist. Durch eine Relativbewegung der Schaltkontaktstücke zueinander sind die beiden Kontaktierungsseiten miteinander elektrisch kontaktierbar bzw. die beiden Kontaktierungsseiten voneinander elektrisch isolierbar. Eine Nutzung einer schaltstellenfreien Verbindung zu der Schalteinrichtung ermöglicht eine zuverlässige elektrische Kontaktierung der beiden Kontaktseiten unmittelbar mit den an den Durchführungsanordnungen angesetzten Steckern bzw. an den Steckern befindlichen Kabeln. Dadurch ist ein Auftreten von Störstellen im Zuge beispielsweise einer Einbindung des Schaltfeldes in ein Kabel verhindert. Eine zuverlässige Kontaktierung der beiden Schaltkontaktstücke der Schalteinrichtung ist so sichergestellt.

Sollte dies notwendig erscheinen, so kann im Bedarfsfalle auch auf dem Weg der Phasenleiter von der Durchführungsanordnung zu der Schalteinrichtung hin beispielsweise eine zusätzliche Schalteinrichtung, beispielsweise ein Trennschalter, angeordnet sein. Der Trennschalter erfüllt dabei im Wesentlichen Sicherheitsanforderungen, so dass beispielsweise bei einer geöffneten Schaltstrecke der Schalteinrichtung eine zusätzliche Isolationsstrecke durch den Trennschalter geschaffen werden kann. Somit ist eine Redundanz gegeben, die bei einem Ausfall der Schaltstrecke zuverlässig einen elektrisch isolierenden Abschnitt in dem schaltbaren Strompfad sicherstellt. Es kann beispielsweise vorgesehen sein, dass an einem Flansch, welcher einer Positionierung der Durchführungsanordnung dient, ein Zwischenmodul angeordnet ist, innerhalb welchem ein Trennschalter angeordnet ist.

Eine weitere vorteilhafte Ausgestaltung kann vorsehen, dass eine Schaltstrecke als Leistungsschaltstrecke und als Trennschaltstrecke wirkt.

Eine Nutzung der Schaltstrecke als Leistungsschaltstrecke sowie als Trennschaltstrecke hat den Vorteil, dass eine Leistungsschaltfunktion sowie eine sichernde Trennschaltfunktion durch ein und dieselbe Schaltstrecke bzw. ein und dieselbe Schalteinrichtung realisiert sind. So kann beispielsweise vorgesehen sein, dass die Schalteinrichtung eine Leistungsschalteinrichtung und folglich die Schaltstrecke eine Leistungsschaltstrecke ist. Das heißt mittels der Schalteinrichtung ist ein Schalten von Nennströmen und Kurzschlussströmen möglich. Durch die Nutzung ein und derselben Schaltstrecke auch als Trennschaltstrecke wird die Sicherheit des druckfluidisolierten Schaltfeldes erhöht, da zusätzlich zur Funktion der Leistungsschaltstrecke auch die Sicherheitsfunktion einer Trennschaltstrecke in der Schaltstrecke der Schalteinrichtung realisiert ist. Beispielsweise kann die Schaltstrecke einen zusätzlichen Hub vollziehen, um die Trennschaltbedingung der Trennschaltstrecke zu realisieren.

Weiterhin kann vorteilhaft vorgesehen sein, dass eine mechanische Blockierungseinrichtung ein relatives Bewegen von Schaltkontaktstücken der Schalteinrichtung im Zustand der Trennschaltstrecke blockiert.

Zur Realisierung der Trennschaltstrecke kann vorgesehen sein, dass nach einem erfolgten Ausschaltvorgang der Leistungsschaltstrecke diese durch eine Blockiereinrichtung mechanisch blockiert ist, so dass auch bei einer Störung der Schaltstrecke keinerlei Bewegung der relativ zueinander bewegbaren Kontaktstücke der Schalteinrichtung möglich ist. Eine derartige mechanische Blockiereinrichtung kann beispielsweise wirksam werden in dem Moment, in welchem die Leistungsschaltstrecke ihren Leistungsschalthub vollzogen hat. Es kann jedoch auch vorgesehen sein, dass ein zusätzlicher Überhub der relativ zueinander bewegbaren Kontaktstücke erfolgt und erst in diesem Zustand eine mechanische Blockierung vorgenommen wird.

Eine mechanische Blockierung wirkt beispielsweise in Störfällen einem unerwünschten Einschalten der Schalteinrichtung entgegen. Dies ist beispielsweise bei Störungen von elektrischen Leiteinrichtungen möglich. Die Blockiereinrichtung wirkt dabei mechanisch, so dass die störungsbedingten Einschaltvorgänge durch die mechanische Blockiereinrichtung verhindert sind. Die mechanische Blockiereinrichtung hält die voneinander elektrisch isolierten Schaltkontaktstücke bzw. Kontaktseiten relativ zueinander beabstandet in Ruhe.

Eine weitere vorteilhafte Ausgestaltung kann vorsehen, dass eine Zylinderachse des im Wesentlichen hohlzylindrischen Abschnittes des Druckbehälters im Wesentlichen in einer Vertikalen liegt und Kabel aus im Wesentlichen vertikalen Richtungen in Winkelsteckern münden.

Eine vertikale Ausrichtung des im Wesentlichen hohlzylindrischen Abschnittes des Druckbehälters ermöglicht eine Ausgestaltung eines Schaltfeldes mit einer geringen Grundfläche, wobei sich in Richtung der Vertikalen eine größere Erstreckung des Schaltfeldes ergibt, als in Richtung einer Horizontalen. Werden nunmehr auch die mit den Winkelsteckern abgeschlossenen Kabel im Wesentlichen aus vertikalen Richtungen zu dem Schaltfeld zugeführt, so ist es beispielsweise möglich, das druckfluidisolierte Schaltfeld innerhalb eines Schachtes anzuordnen. Die Winkelstecker lenken den Phasenleiter um bevorzugt 90° um, so dass ein mantelseitiges Anschließen der Kabel an das druckfluidisolierte Schaltfeld vereinfacht platzsparend möglich ist.

Eine weitere vorteilhafte Ausgestaltung kann vorsehen, dass mehrere Winkelstecker an zumindest einer Durchführungsanordnung einen Abzweigknoten in einem Verbindungskabel in der Peripherie des Druckbehälters bilden.

Durch die Bildung eines Abzweigknotens ist es möglich, ein Verbindungskabel, welches beispielsweise innerhalb eines Elektroenergieübergangsnetzwerkes zwei Punkte verbindet, in einem Abzweigknoten abzweigen zu lassen und an dem Abzweigknoten beispielsweise einen Abzweig oder mehrere Abzweige abgehen zu lassen. Das Verbindungskabel kann beispielsweise einen Abschnitt einer Ringleitung ausbilden. In einem Abzweig kann beispielsweise eine Schalteinrichtung eingeschleift sein, so dass über den Abzweigknoten, welcher bevorzugt zwischen Winkelsteckern gebildet ist, das Verbindungskabel durchlaufen kann. Beispielsweise können die Winkelstecker als Durchgangswinkelstecker ausgebildet sein, wobei die Winkelstecker einen Innenkonus aufweisen, um auf den Außenkonus der Steckverbinder der Durchführungsanordnung aufzugleiten und ihrerseits eine weitere Kontaktierungsmöglichkeit aufweisen, um beispielsweise einen weiteren Winkelstecker anzusetzen. Somit ist es möglich, die Phasenleiter der einzelnen Winkelstecker miteinander in einer Winkelsteckersteckverbindung zu verbinden und so einen Abzweigknoten zu bilden, wobei ein Phasenleiter des Verbindungskabels durch die beiden miteinander elektrisch kontaktierten Winkelstecker läuft und über einen Winkelstecker ein Abzweig gebildet ist, an welchem ein Steckverbinder einer Durchführungsanordnung des druckfluidisolierten Schaltfeldes angesetzt ist. Somit ist die Nutzung eines separaten Abzweigmoduls im Verbindungskabel nicht nötig, da ein Abzweig/Stich durch eine elektrische Kontaktierung zumindest zweier Steckverbinder an dem druckfluidisolierten Schaltfeld sichergestellt ist. Der Abzweigknoten kann dabei unmittelbar in der Peripherie des Druckbehälters ausgebildet werden (und mechanisch an diesen gestützt sein); somit sind separate Baugruppen zur Gestaltung des Abzweiges/Stiches nicht nötig.

Eine weitere vorteilhafte Ausgestaltung kann vorsehen, dass das Schaltfeld an einem Abzweigkabel, welches über eine Abzweigbox aus einem Verbindungskabel ausgeleitet ist, angeschlossen ist.

Die Nutzung einer Abzweigbox innerhalb eines Verbindungskabels ermöglicht es, ein Abzweigkabel auszuleiten. Somit ist es beispielsweise möglich, eine Schaltanlage an dem Abzweigkabel anzuschließen. Die Abzweigbox kann beispielsweise mit einer Trennschalteinrichtung ausgestattet sein. Damit ist es beispielsweise möglich, das Abzweigkabel von dem Verbindungskabel elektrisch zu trennen. Zwar wird so ein zusätzliches Modul in Form der Abzweigbox benötigt, jedoch ergibt sich eine erhöhte Schaltungsvarianz. Gegebenenfalls kann in der Abzweigbox auch eine Erdungsschalteinrichtung vorgesehen sein, so dass beispielsweise auch das Abzweigkabel über die Abzweigbox geerdet werden kann. Das Verbindungskabel kann einen Abschnitt einer Ringleitung ausbilden.

Eine weitere vorteilhafte Ausgestaltung kann vorsehen, dass das Schaltfeld ein Einspeisefeld eines elektrischen Generators ist.

Ein elektrischer Generator dient der Wandlung bzw. "Erzeugung" von elektrischer Energie. Ein derartiger Generator kann beispielsweise wasserkraftgetrieben, windkraftgetrieben etc. ausgeführt sein. Über das Schaltfeld ist somit die von einem elektrischen Generator "erzeugte" elektrische Energie in ein Elektroenergieübertragungsnetz einzuspeisen. Somit ist es möglich, elektrische Energie zu Verbrauchern zu transportieren. Beispielsweise können in ein Verbindungskabel auch mehrere elektrische Generatoren elektrische Energie einspeisen. Vorzugsweise sollten dabei Schaltfelder der vorstehend beschriebenen Art zum Einsatz gelangen.

Eine weitere vorteilhafte Ausgestaltung kann vorsehen, dass das Schaltfeld innerhalb eines vor Bewitterung schützenden turmartigen Bauwerkes angeordnet ist.

Ein turmartiges Bauwerk ist beispielsweise der Turm einer Windenergieanlage, welche an einem freien Ende des Turmes einen Rotor aufweist, welcher einen elektrischen Generator treibt. Ein derartiges turmartiges Bauwerk weist in seinem Inneren beispielsweise einen Schacht auf, der sich im Wesentlichen in vertikaler Richtung erstreckt. Innerhalb des Schachtes ist die Anordnung des Schaltfeldes möglich, so dass dieses zusätzlich vor äußeren Einflüssen geschützt ist. Unabhängig von dem Schutz der Schaltanlage durch das Bauwerk ist durch die spezielle Ausgestaltung der Durchführungsanordnung des druckfluidisolierten Schaltfeldes selbst bei aggressiven Atmosphären im Inneren des Bauwerkes ein ausreichender elektrischer Schutz gegeben. So ist es beispielsweise möglich, das turmartige Bauwerk in Meeresnähe oder in einem Meer anzuordnen.

Im Folgenden wird ein Ausführungsbeispiel der Erfindung schematisch in einer Zeichnung gezeigt und nachfolgende näher beschrieben.

Dabei zeigt die
- Figur 1: einen Schnitt durch eine Windkraftanlage mit einem druckfluidisolierten Schaltfeld in einer ersten Nutzungsvariante, die
- Figur 1a: ein prinzipielles Schaltbild des in der Figur 1 in erster Nutzungsvariante gezeigten Schaltfeldes, die
- Figur 2: einen Schnitt durch die erste Nutzungsvariante des Schaltfeldes, die
- Figur 3: einen Schnitt durch eine Windenergieanlage mit einem druckfluidisolierten Schaltfeld in einer zweiten Nutzungsvariante, die
- Figur 3a: ein prinzipielles Schaltbild des Schaltfeldes in der zweiten Nutzungsvariante nebst Abzweigbox, die
- Figur 4: einen Schnitt durch ein Schaltfeld in der zweiten Nutzungsvariante.

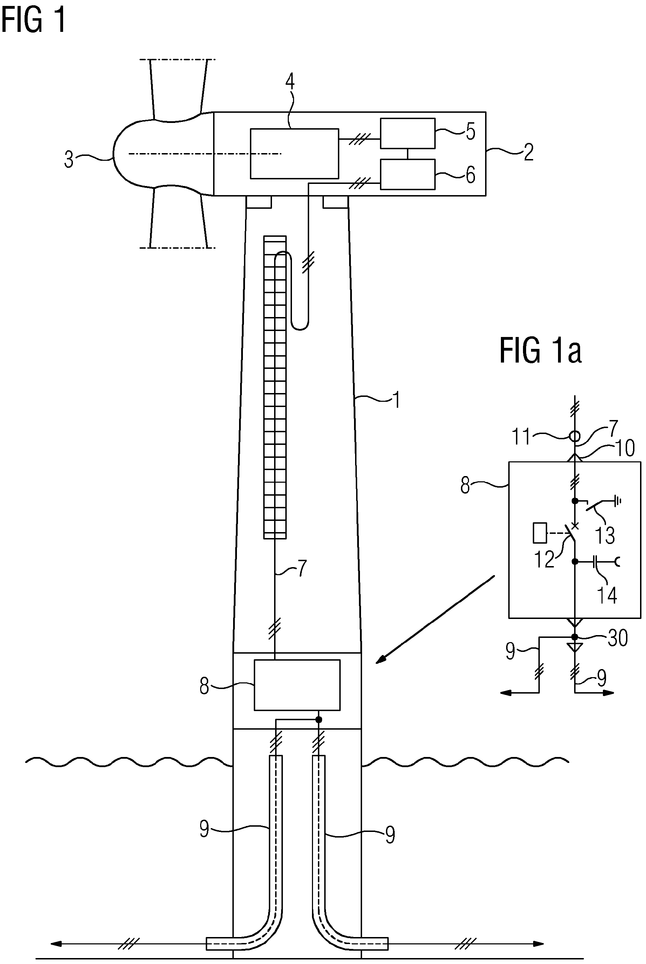

Die Figur 1 zeigt einen Schnitt durch eine Windkraftanlage, welche einen Turm 1 aufweist, welcher mit seiner Basis auf einem Fundament ruht. An seinem freien Ende ist der Turm 1 mit einer Gondel 2 ausgestattet, welche einen Rotor 3 trägt. Der Rotor 3 ist mit einem Generator 4 verbunden, welcher eine Bewegung des Rotors 3 in elektrische Energie wandelt. Der Generator 4 wiederum ist mit einem Wechselrichter 5 sowie einem Transformator 6 verbunden, so dass die von dem Generator 4 abgegebene elektrische Energie über den Wechselrichter 5 und den Transformator 6 in eine normierte Größe gewandelt werden kann. Der Transformator 6 transformiert die wechselgerichtet Energie in eine geeignete Spannungsebene. Über eine erste Kabelverbindung 7 ist der Generator 4 unter Zwischenschaltung des Wechselrichters 5 bzw. des Transformators 6 mit einem druckfluidisolierten Schaltfeld 8 in erster Nutzungsvariante verbunden. Das druckfluidisolierte Schaltfeld 8 in erster Nutzungsvariante ist im Bereich der Basis des Turmes 1 angeordnet. Über ein Verbindungskabel 9 ist das druckfluidisolierte Schaltfeld 8 in erster Nutzungsvariante in ein Elektroenergieübertragungsnetz eingebunden. Die erste Kabelverbindung 7 ist unter Zwischenschaltung des druckfluidisolierten Schaltfeldes 8 in erster Nutzungsvariante als Abzweig an einem Abzweigknoten des Verbindungskabels 9 angeschlossen.

Die Gesamtanordnung des druckfluidisolierten Schaltfeldes 8 in der ersten Nutzungsvariante ist in der Figur 1 lediglich schematisch abgebildet.

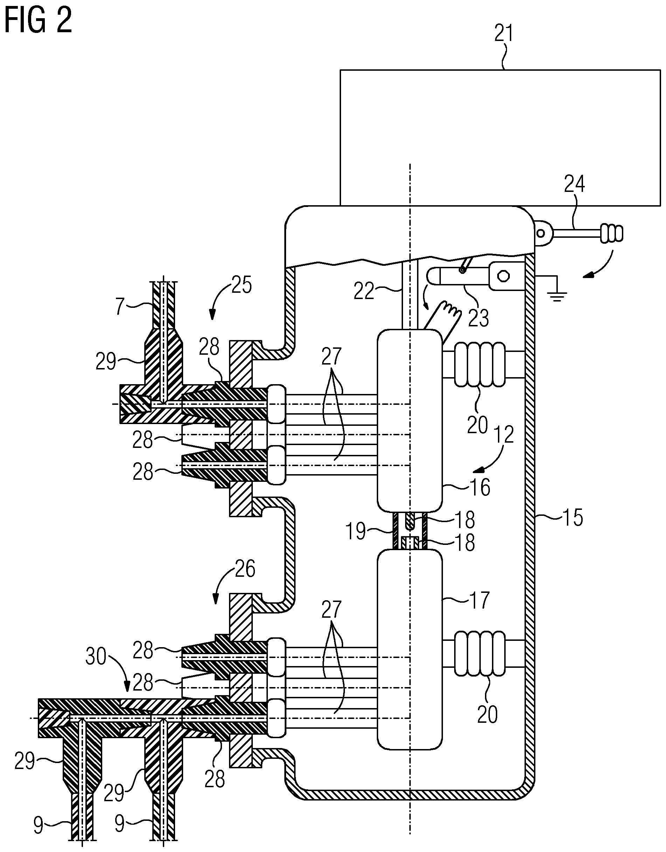

Die Figur 1a zeigt das druckfluidisolierte Schaltfeld 8 in der ersten Nutzungsvariante schematisch in einem Schaltbild (Schaltung entspricht prinzipiell sowohl einpoliger als auch mehrpoliger Ausführung). Dabei ist der rechteckige Kasten als fluiddichte Barriere zu interpretieren. Das erste Kabel 7 ist über einen Steckverbinder 10 mit dem Schaltfeld 8 der ersten Nutzungsvariante verbunden. An dem ersten Kabel 7 ist ein Kabelumbauwandler 11 angeordnet, mittels welchem eine elektrische Durchströmung des ersten Kabels 11 gemessen werden kann. Das Verbindungskabel 9 ist außerhalb der fluiddichten Barriere des Schaltfeldes 8 der ersten Nutzungsvariante über miteinander gekoppelte Winkelstecker (vgl. Fig. 2) mit einem Abzweigknoten versehen, so dass das erste Kabel 7 als Abzweigkabel unter Zwischenschaltung des druckfluidisolierten Schaltfeldes 8 der ersten Nutzungsvariante mit dem Verbindungskabel 9 verbunden ist. Zum Abschalten bzw. Beschalten des ersten Kabels 7 ist in dem Schaltfeld 8 der ersten Nutzungsvariante eine Schalteinrichtung 12 angeordnet. Weiterhin ist das erste Kabel 7 über einen handbetätigbaren Erdungsschalter 13 des druckfluidisolierten Schaltfeldes 8 der ersten Nutzungsvariante erdbar. Zur Überwachung des Zustandes des das druckfluidisolierte Schaltfeld 8 der ersten Nutzungsvariante durchlaufenden Phasenleiters ist eine kapazitive Spannungsmessung 14 vorgesehen. Über die kapazitive Spannungsmessung 14 ist aufgrund der Verschaltung der Zustand des Verbindungskabels 9 überwachbar, wohingegen der Kabelumbauwandler 11 die Strombelastung des abzweigenden ersten Kabels 7 abbildet. Alternativ oder zusätzlich können auch weitere Spannungsmessungen an weiteren Punkten eingesetzt werden. Weiter können auch von einer kapazitiven Spannungsmessung abweichende Verfahren (induktive Messverfahren etc.) zum Einsatz gelangen.

Die Figur 2 zeigt einen Schnitt durch das bereits in den Figuren 1 und 1a schematisch gezeigte Schaltfeld 8 erster Nutzungsvariante. Das Schaltfeld 8 erster Nutzungsvariante weist einen Druckbehälter 15 auf. Der Druckbehälter 15 ist vorliegend als Aluminiumgussbehälter ausgebildet, welcher im Wesentlichen eine hohlzylindrische Struktur aufweist, die an ihren stirnseitigen Enden fluiddicht verschlossen ist. Das Innere des Druckbehälters 15 ist mit einem unter Überdruck stehenden Fluid, insbesondere Schwefelhexafluoridgas befüllt, so dass eine elektrische Isolation der weiteren im Innern des Druckbehälters 15 befindlichen Elemente gegeben ist. In dem Druckbehälter 15 ist weiterhin eine Schalteinrichtung 12 angeordnet. Die Schalteinrichtung 12 ist vorliegend mehrphasig ausgeführt, wobei Schaltstrecken der einzelnen Phasen fluchtend zu der Zeichenebene hintereinander liegend gleichartig ausgeführt sind. Beispielhaft soll der Aufbau der Schalteinrichtung 12 anhand der in der Figur 2 erkennbaren ersten Phase beschrieben werden. Die Schalteinrichtung 12 weist jeweils für jede Phase eine erste Kontaktierungsseite 16 sowie eine zweite Kontaktierungsseite 17 auf. Zwischen den beiden Kontaktierungsseiten 16, 17 sind relativ zueinander bewegbare Schaltkontaktstücke 18 angeordnet. Die beiden Kontaktierungsseiten 16, 17 sind durch elektrisch isolierende Abstandshalter 19 miteinander winkelstarr verbunden. Um die Kontaktierungsseiten 16, 17 und damit die Schalteinrichtung 12 innerhalb des Druckbehälters zu positionieren, sind Stützisolatoren 20 eingesetzt. Alternativ zu einer fluchtenden Anordnung der einzelnen Phasen der Schalteinrichtung 12 könnten diese auch innerhalb der Druckbehälteranordnung, beispielsweise versetzt zueinander angeordnet sein.

Um eine Relativbewegung der beiden relativ zueinander bewegbaren Kontaktstücke 18 zu erzielen, ist eine Antriebseinrichtung 21 außerhalb der Druckbehälteranordnung 15 angeordnet. Über eine fluiddicht durch die Barriere des Druckbehälters 15 hindurchgeführte Antriebsstange 22 ist eine Erzeugung einer Relativbewegung der Kontaktstücke 18 möglich. Neben der Schalteinrichtung 12 ist innerhalb des Druckbehälters 15 ein Erdungsschalter 23 angeordnet, welcher dem Erden der ersten Kontaktierungsseite 16 der Schalteinrichtung 12 dient. Der Erdungsschalter 23 weist ein Schwenkmesser auf, welches über eine Handbetätigung 24 eine Erdung der ersten Kontaktierungsseite 16 sowie sämtlicher mit der ersten Kontaktierungsseite 16 verbundenen Phasenleiter ermöglicht. Auf der zweiten Kontaktierungsseite 16 ist eine Spannungsmessung 14 (in der Figur 2 verdeckt) angeordnet.

Zur Einbindung der Schalteinrichtung 12 in einen Strompfad ist die Verwendung einer ersten Durchführungsanordnung 25 sowie einer zweiten Durchführungsanordnung 26 vorgesehen. Sowohl die erste Durchführungsanordnung als auch die zweite Durchführungsanordnung 25, 26 sind mantelseitig am Druckbehälter 15 angeordnet. Dazu weist der Druckbehälter 15 Stutzen auf, welche durch Flanschdeckel verschlossen sind. Die jeweiligen Flanschdeckel nehmen die ersten Durchführungsanordnung 25 bzw. die zweite Durchführungsanordnung 26 auf. Die beiden Durchführungsanordnung 25, 26 sind jeweils dreiphasig ausgebildet, d. h., mehrere elektrisch isolierende Durchführungskörper sind in die Flanschdeckel eingesetzt und leiten jeweils einen Phasenleiter durch die Flanschdeckel hindurch. So ist es möglich, über Verbindungsleiter 27, die jeweils durch die Isolierkörper der beiden Durchführungsanordnungen 25, 26 durch die Barriere des Druckbehälters 15 hindurchgeführten Phasenleiter zu der ersten Kontaktierungsseite 16 bzw. der zweiten Kontaktierungsseite 17 der einzelnen Phasen der Schalteinrichtung 12 zu leiten. In der Figur 2 sind dabei symbolisch die Verbindungsleiter 27 sämtlichst gleichartig ausgebildet. Aufgrund der Perspektive nicht ersichtlich, sind die einzelnen Verbindungsleiter 27 jedoch verschiedenartig ausgebogen, um die einzelnen Phasen der Schalteinrichtung 12 mit den jeweiligen Phasenleitern, welche durch die erste bzw. zweite Durchführungsanordnung 25, 26 in das Innere des Druckbehälters geleitet wurden, zu verbinden.

Die erste bzw. die zweite Durchführungsanordnung 25, 26 weist entsprechende Isolierkörper auf, welche auf der außerhalb des Druckbehälters 15 angeordneten Seite jeweils einen Außenkonus aufweisen, so dass außenkonische Steckverbinder 28 gebildet sind. Die außenkonischen Steckverbinder 28 sind dabei derart ausgebildet, dass diese sich elektrisch isolierend durch die Flanschdeckel der ersten bzw. der zweiten Durchführungsanordnung 25, 26 erstrecken, wobei die außenkonischen Steckverbinder 28 jeweils einen Phasenleiter ummanteln und diesen elektrisch isoliert durch die Barriere des Druckbehälters 15 in das Innere des Druckbehälters 15 führen.

Die außenkonischen Steckverbinder 28 sind dazu vorgesehen, dass Winkelstecker 29 auf die außenkonischen Steckverbinder 28 aufgesetzt werden können. Beispielhaft ist in der Figur 2 jeweils eine einzelne Phase der beiden Durchführungsanordnungen 25, 26 mit einem oder mehreren Winkelsteckern 29 ausgestattet. Dabei ist vorgesehen, dass an der ersten Durchführungsanordnung 25 auf jedem außenkonischen Steckverbinder 28 genau ein Winkelstecker 29 aufsitzt, so dass ein mehradriges Kabel über die erste Durchführungsanordnung 25 mit der ersten Kontaktierungsseite 16 der Schalteinrichtung 12 verbunden werden kann. An der zweiten Durchführungsanordnung 26 ist vorgesehen, dass jeweils ein erster Winkelstecker 29 sowie ein zweiter Winkelstecker 29 an jedem der außenkonischen Steckverbinder 28 angesteckt ist, so dass jeweils ein Abzweigknoten 30 an jedem außenkonischen Steckverbinder 28 der zweiten Durchführungsanordnung 26 ausgebildet ist. Somit ist es möglich, das Verbindungskabel 9 durch die an der zweiten Durchführungsanordnung 26 befindlichen Winkelstecker 29 hindurchzuschleifen und einen Abzweigknoten 30 für das erste Kabel 7 zu bilden, welches über das Schaltfeld 8 der ersten Nutzungsvariante schaltbar ist.

Vorliegend ist das druckfluidisolierte Schaltfeld 8 in erster Nutzungsvariante mit einer Schaltstrecke versehen, die sowohl als Leistungsschaltstrecke als auch als Trennschaltstrecke wirkt. Zur Realisierung der Trennschaltstreckenfunktionalität ist vorgesehen, dass im Bereich der Antriebseinrichtung 21 eine Blockierungseinrichtung angeordnet ist, so dass im Trennschaltzustand ein unbeabsichtigtes Einschalten der Schalteinrichtung, beispielsweise in Folge einer Störung, mechanisch unterbunden ist.

Alternativ kann auch vorgesehen sein, dass statt eines direkten unmittelbaren Kontaktierens der Schalteinrichtung 12 mit den Durchführungsanordnungen 25, 26 im Bereich der Flansche an beiden oder zumindest an einer der Durchführungsanordnungen 25, 26 ein Zwischenschalten einer separaten Trennschalteinrichtung erfolgt. Dies kann beispielsweise integriert in den Zug der Verbindungsleiter 27 erfolgen. Es kann jedoch auch ein Anflanschen jeweils eines Zwischenmoduls mit Trennschalteinrichtung an den mantelseitigen Flanschen des Druckbehälters 15 vorgesehen sein.

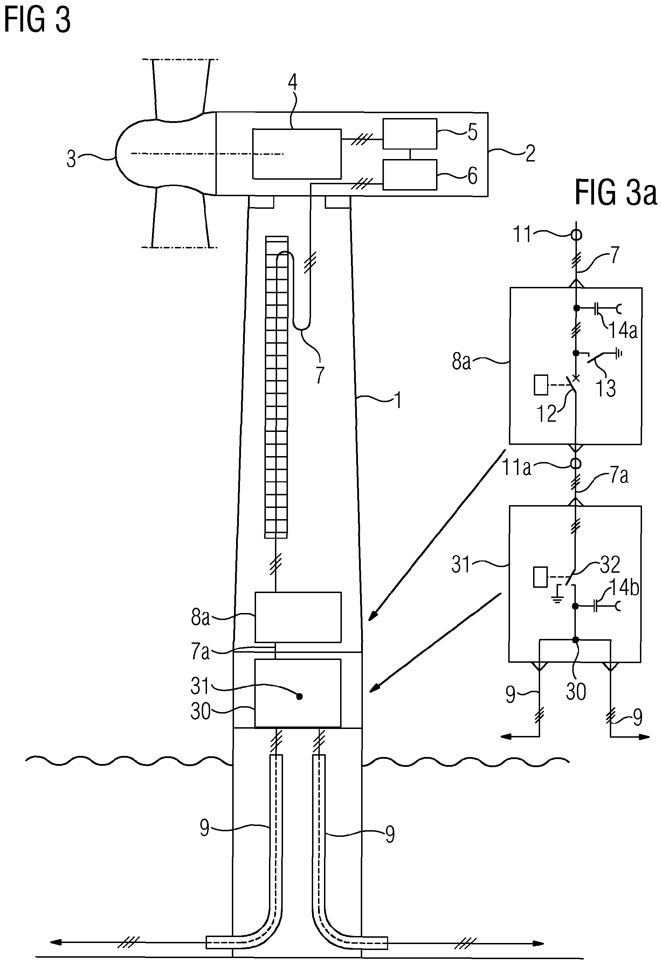

Die Figur 3 zeigt eine Abwandlung der aus der Figur 1 bekannten Konstruktion mit Turm 1, Gondel 2, Rotor 3, Generator 4, Wechselrichter 5 sowie Transformator 6. Eine Einbindung des Generators 4 in ein Verbindungskabel 9 erfolgt wiederum unter Nutzung eines ersten Kabels 7, wobei zwischen dem Verbindungskabel 9 sowie dem ersten Kabel 7 ein druckfluidisoliertes Schaltfeld 8a in zweiter Nutzungsvariante angeordnet ist. Das druckfluidisolierte Schaltfeld 8a in zweiter Nutzungsvariante basiert auf einer Abwandlung bzw. alternativen Nutzung der aus der Figur 1 bekannten ersten Nutzungsvariante des Schaltfeldes 8. Hier ist jedoch vorgesehen, dass zur Erzeugung eines Abzweigknotens 30 eine Abzweigbox 31 eingesetzt ist. Die Abzweigbox 31 ist verschieden von dem Schaltfeld 8a der zweiten Nutzungsvariante aufgebaut. Damit ist es möglich, das erste Kabel 7 vollumfänglich durch das Schaltfeld 8a in zweiter Nutzungsvariante hindurchlaufen zu lassen und das erste Kabel 7/eine Verlängerung 7a des ersten Kabels 7 in der Abzweigbox 31 münden zu lassen.

In der Figur 3a ist ein prinzipielles Schaltbild der in Figur 3 gezeigten Konstellation dargestellt. Das Schaltfeld 8a in der zweiten Nutzungsvariante ist über eine Durchführungsanordnung mit Steckverbinder mit dem ersten Kabel 7 verbunden. An dem ersten Kabel 7 ist ein Kabelumbauwandler 11 angeschlossen, um die Strombelastung des ersten Kabels 7 ermitteln zu können. Das Schaltfeld 8a in der zweiten Ausführungsvariante weist wiederum eine Schalteinrichtung 12 auf, welche einem Schalten eines Strompfades dient. Die Schalteinrichtung 12 ist auf ihrer einen Kontaktierungsseite mit dem ersten Kabel 7 verbunden. Auf ihrer anderen Kontaktierungsseite ist die Schalteinrichtung 12 mit einer Verlängerung 7a des ersten Kabels 7 verbunden. Auch an der Verlängerung 7a des ersten Kabels 7 ist ein Kabelumbauwandler 11a angeordnet, um auch an dieser Seite die Strombelastung der Verlängerung 7a des ersten Kabels 7 zu ermitteln. Weiterhin weist auch hier das Schaltfeld 8a in zweiter Nutzungsvariante einen Erdungsschalter 13 auf, mittels welchem eine erste Kontaktierungsseite 16 der Schalteinrichtung 12 erdbar ist. Weiterhin ist hier alternativ zum Schaltbild nach Figur 1a die Nutzung einer kapazitiven Spannungsmessung 14a auf der Seite der Schalteinrichtung 12 vorgesehen, welche dem ersten Kabel 7 zugewandt ist. Darüber hinaus können alternativ oder zusätzlich auch weitere Messverfahren zur Spannungsmessung genutzt werden.

Abweichend von der Schaltungsvariante, wie sie in der Figur 1a beschrieben ist, ist statt der Nutzung zweier miteinander verbundener Winkelstecker zur Ausbildung eines Abzweigknotens 30 die Verwendung einer separaten Abzweigbox 31 vorgesehen. In der separaten Abzweigbox ist ein Trenn-Erdungsschalter 32 angeordnet, über welchen ein zusätzliches Abtrennen des zweiten Abschnittes 7a des ersten Kabels 7 bzw. ein zusätzliches Erden des zweiten Abschnittes 7a des ersten Kabels 7 erfolgen kann. Weiterhin ist eine zweite kapazitive Spannungsmessung 14b vorgesehen, um den Zustand des die Abzweigbox 31 durchlaufenden Verbindungskabels 9 zu überwachen. Das Verbindungskabel 9 ist dabei ebenfalls über Steckverbinder mit der Abzweigbox 31 verbunden, wobei jeweils Steckverbinder für den Ein- und den Ausgang des Verbindungskabels 9 an der Abzweigbox 31 vorgesehen sind. Es kann jedoch auch vorgesehen sein, dass analog zur Ausbildung des Abzweigknotens nach Schaltung Figur 1a bzw. der Darstellung der Figur 2 ein Ineinanderstecken von Winkelsteckern vorgesehen ist, so dass der Abzweigknoten 30 außerhalb der Abzweigbox 31 gebildet ist.

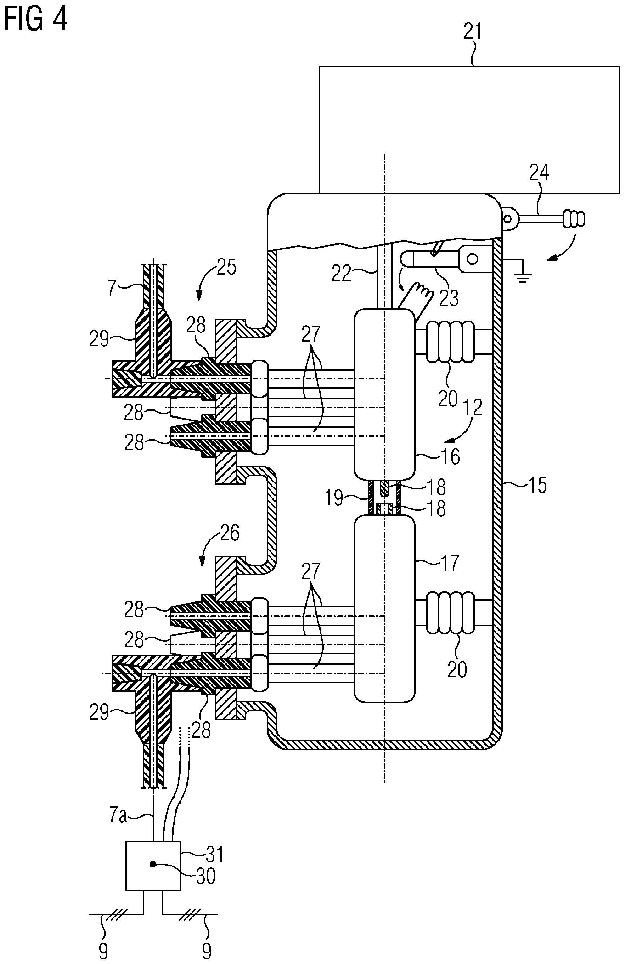

Im Folgenden ist in der Figur 4 ein Schnitt durch das Schaltfeld 8a in der zweiten Ausführungsvariante gezeigt. Dabei wird bezüglich des Aufbaus des Schaltfeldes 8a in der zweiten Nutzungsvariante auf die Ausführungen zur Figur 2 verwiesen.

Abweichend gestaltet sich lediglich die Einbindung des Schaltfeldes 8a in der zweiten Nutzungsvariante in das Verbindungskabel 9. Statt der Nutzung von mehrfach ineinander gesteckten Winkelsteckern 29 an der zweiten Durchführungsanordnung 26 ist hier die Verwendung von einfach genutzten Winkelsteckern 29 vorgesehen, da eine Bildung des Knotenpunktes 30 innerhalb der Abzweigbox 31 vorgenommen ist. Zur Durchschleifung des Verbindungskabels 9 durch die Abzweigbox 31 bzw. zum Anschluss der Verlängerung 7a des ersten Kabels 7 an die Abzweigbox 31 können gleichartige Steckverbinder und Stecker, wie von dem Schaltfeld 8, 8a bekannt, genutzt werden.

## Patentansprüche

1. Druckfluidisoliertes Schaltfeld (8, 8a) aufweisend einen hohlvolumigen zumindest abschnittsweise im Wesentlichen hohlzylindrisch geformten Druckbehälter (15), welcher in seinem Innern eine Schalteinrichtung (12), insbesondere eine Leistungsschalteinrichtung aufnimmt sowie eine erste Durchführungsanordnung (25) und eine zweite Durchführungsanordnung (26) zur Einbindung der Schalteinrichtung (12) in einen Strompfad, wobei zumindest die erste, insbesondere die erste und die zweite Durchführungsanordnung (25, 26) mantelseitig am im Wesentlichen hohlzylindrischen Abschnitt des Druckbehälters (15) angeordnet ist/sind, wobei die erste und die zweite Durchführungsanordnung (25, 26) einen Steckverbinder (28) aufweisen, und die Durchführungsanordnungen (25, 26) einen Phasenleiter (27) fluiddicht elektrisch isoliert durch eine Barriere des Druckbehälters (15) führend, an einem Flanschdeckel abgestützt sind,
**dadurch gekennzeichnet, dass**
an der ersten Durchführungsanordnung (25) ein erster Winkelstecker (29) und an der zweiten Durchführungsanordnung (26) ein zweiter Winkelstecker (29) angesetzt sind, welche jeweils ein Kabel (7, 7a, 9) abschließen, wobei die abgeschlossenen Kabel (7, 7a, 9) im Wesentlichen aus entgegengesetzten Richtungen auf den jeweiligen Winkelstecker (29) zulaufen und eine Zylinderachse des im Wesentlichen hohlzylindrischen Abschnittes des Druckbehälters (15) im Wesentlichen in einer Vertikalen liegt und Kabel (7, 7a, 9) aus im Wesentlichen vertikalen Richtungen in Winkelsteckern (29) münden.

2. Druckfluidisoliertes Schaltfeld nach Anspruch 1,
**dadurch gekennzeichnet, dass**
an zumindest einer der Durchführungsanordnungen (25,26) ein Steckverbinder (28) mit einem Winkelstecker (29) in Eingriff steht.

3. Druckfluidisoliertes Schaltfeld nach einem der Ansprüche 1 oder 2,
**dadurch gekennzeichnet, dass**
die Schalteinrichtung (12)eine Schaltstrecke aufweist, welche zwischen einer ersten Kontaktierungsseite (16) und einer zweiten Kontaktierungsseite (17) angeordnet ist, wobei die erste Durchführungsanordnung (25) mit der ersten Kontaktierungsseite (16) schaltstellenfrei verbunden ist und die zweite Durchführungsanordnung (26) mit der zweiten Kontaktierungsseite (17)schaltstellenfrei verbunden ist.

4. Druckfluidisoliertes Schaltfeld nach Anspruch 3,
**dadurch gekennzeichnet, dass**
eine Schaltstrecke als Leistungsschaltstrecke und als Trennschaltstrecke wirkt.

5. Druckfluidisoliertes Schaltfeld nach Anspruch 4,
**dadurch gekennzeichnet, dass**
eine mechanische Blockierungseinrichtung ein relatives Bewegen von Schaltkontaktstücken (18) der Schalteinrichtung (12) im Zustand der Trennschaltstrecke blockiert.

6. Druckfluidisoliertes Schaltfeld nach einem der Ansprüche 1 bis 5,
**dadurch gekennzeichnet, dass**
mehrere Winkelstecker (29) an zumindest einer Durchführungsanordnung (25, 26) einen Abzweigknoten (30) in einem Verbindungskabel (9) in der Peripherie des Druckbehälters (15) bilden.

7. Druckfluidisoliertes Schaltfeld nach einem der Ansprüche 1 bis 6,
**dadurch gekennzeichnet, dass**
das Schaltfeld (8, 8a) an einem Abzweigkabel (7, 7a), welches über eine Abzweigbox (31) aus einem Verbindungskabel (9) ausgeleitet ist, anschließbar ist.

8. Druckfluidisoliertes Schaltfeld nach einem der Ansprüche 1 bis 7,
**dadurch gekennzeichnet, dass**
das Schaltfeld (8, 8a) angepasst ist ein Einspeisefeld eines elektrischen Generators (4) zu sein.

9. Druckfluidisoliertes Schaltfeld nach einem der Ansprüche 1 bis 8,
**dadurch gekennzeichnet, dass**
das Schaltfeld (8, 8a) innerhalb eines vor Bewitterung schützenden turmartigen Bauwerkes (1) anordenbar ist.

## Claims

1. Pressurized fluid-insulated switch panel (8, 8a) having a high-volume pressurized container (15) which is of substantially hollow cylindrical shape at least in sections and which, in its interior, accommodates a switching device (12), in particular a power switching device, and also a first bushing arrangement (25) and a second bushing arrangement (26) for incorporating the switching device (12) into a current path, wherein at least the first bushing arrangement, in particular the first and the second bushing arrangement (25, 26), are/is arranged on the casing side of the substantially hollow-cylindrical section of the pressurized container (15), wherein the first and the second bushing arrangement (25, 26) have a plug-in connector (28), and the bushing arrangements (25, 26) are supported on a flange cover in a manner guiding a phase conductor (27) in a fluid-tight and electrically insulated manner through a barrier of the pressurized container (15),
**characterized in that**
a first angled plug (29) is attached to the first bushing arrangement (25) and a second angled plug (29) is attached to the second bushing arrangement (26), which angled plugs each terminate a cable (7, 7a, 9), wherein the terminated cables (7, 7a, 9) taper substantially from opposite directions to the respective angled plug (29) and a cylinder axis of the substantially hollow-cylindrical section of the pressurized container (15) lies substantially in a vertical line and cables (7, 7a, 9) open from substantially vertical directions into angled plugs (29).

2. Pressurized fluid-insulated switch panel according to Claim 1,
**characterized in that**
a plug-in connector (28) engages with an angled plug (29) on at least one of the bushing arrangements (25, 26).

3. Pressurized fluid-insulated switch panel according to either of Claims 1 and 2,
**characterized in that**
the switching device (12) has a switching path which is arranged between a first contact-making side (16) and a second contact-making side (17), wherein the first bushing arrangement (25) is connected, without switching points, to the first contact-making side (16) and the second bushing arrangement (26) is connected, without switching points, to the second contact-making side (17).

4. Pressurized fluid-insulated switch panel according to Claim 3,
**characterized in that**
a switching path acts as a power switching path and as an isolating switching path.

5. Pressurized fluid-insulated switch panel according to Claim 4,
**characterized in that**
a mechanical blocking device blocks a relative movement of switching contact pieces (18) of the switching device (12) in the isolating switching path state.

6. Pressurized fluid-insulated switch panel according to one of Claims 1 to 5,
**characterized in that**
a plurality of angled plugs (29) on at least one bushing arrangement (25, 26) form a branching node (30) in a connecting cable (9) in the periphery of the pressurized container (15).

7. Pressurized fluid-insulated switch panel according to one of Claims 1 to 6,
**characterized in that**
the switch panel (8, 8a) can be connected to a branching cable (7, 7a) which is conducted out of a connecting cable (9) by means of a branching box (31).

8. Pressurized fluid-insulated switch panel according to one of Claims 1 to 7,
**characterized in that** the switch panel (8, 8a) is adapted to be a feed panel of an electrical generator (4).

9. Pressurized fluid-insulated switch panel according to one of Claims 1 to 8,
**characterized in that**
the switch panel (8, 8a) can be arranged within a tower-like structure (1) which protects against weathering.

## Revendications

1. Panneau (8, 8a) de commutation à isolation par du fluide comprimé, comportant un récipient (15) tenant la pression à volume creux conformé, au moins par endroit, sensiblement en cylindre creux, qui, à l'intérieur, reçoit un dispositif (12) de coupure, notamment un dispositif de disjoncteur, ainsi qu'un premier agencement (25) de traversée et un deuxième agencement (26) de traversée pour incorporer le dispositif (12) de coupure dans un trajet de courant, dans lequel au moins le premier, notamment le premier et le deuxième agencements (25, 26) de traversée est/sont disposés du côté de la surface latérale sur une partie sensiblement cylindrique creuse du récipient (15) tenant la pression, dans lequel le premier et le deuxième agencements (25, 26) de traversée ont un connecteur (28) à enfichage et les agencements (25, 26) de traversée conduisant un conducteur (27) de phase d'une manière étanche au fluide de façon isolée électriquement à travers une barrière du récipient (15) tenant la pression sont appuyés sur un couvercle à bride,
**caractérisé en ce que**
au premier agencement (25) de traversée est ajoutée une première fiche (29) d'angle et, sur le deuxième agencement (26) de traversée, une deuxième fiche (29) d'angle, qui enferment chacune un câble (7, 7a, 9), les câbles (7, 7a, 9) enfermés allant sensiblement dans des sens contraires sur la fiche (29) d'angle respective et un axe de cylindre de la partie sensiblement cylindrique creuse du récipient (15) tenant la pression étant sensiblement dans une verticale et des câbles (7, 7a, 9) débouchent dans les fiches (29) d'angle dans des directions sensiblement verticales.

2. Panneau de commutation à isolation par du fluide comprimé suivant la revendication 1,
**caractérisé en ce que**
sur au moins l'un des agencements (25, 26) de traversée, un connecteur (28) à enfichage est en prise avec une fiche (29) d'angle.

3. Panneau de commutation à isolation par du fluide comprimé suivant l'une des revendications 1 ou 2,
**caractérisé en ce que**
le dispositif (12) de coupure a une section de coupure qui est disposée entre un premier côté (16) de mise en contact et un deuxième côté (17) de mise en contact, le premier agencement (25) de traversée étant relié sans point de coupure au premier côté (16) de mise en contact et le deuxième agencement (26) de traversée étant relié sans point de coupure au deuxième côté (17) de mise en contact.

4. Panneau de commutation à isolation par du fluide comprimé suivant la revendication 3,
**caractérisé en ce que**
une section de coupure sert de section de disjonction et de section de sectionnement.

5. Panneau de commutation à isolation par du fluide comprimé suivant la revendication 4,
**caractérisé en ce que**
un dispositif mécanique de blocage empêche un déplacement relatif de pièces (18) de contact de coupure du dispositif (12) de coupure dans l'état de section de sectionnement.

6. Panneau de commutation à isolation par du fluide comprimé suivant l'une des revendications 1 à 5,
**caractérisé en ce que**
plusieurs fiches (29) d'angle forment, sur au moins un agencement (25, 26) de traversée, un nœud (30) de bifurcation dans un câble (9) de liaison à la périphérie du récipient (15) tenant la pression.

7. Panneau de commutation à isolation par du fluide comprimé suivant l'une des revendications 1 à 6,
**caractérisé en ce que**
le panneau (8, 8a) de commutation peut être raccordé à un câble (7, 7a) de bifurcation, qui, par l'intermédiaire d'une boîte (31) de bifurcation, sort d'un câble (9) de liaison.

8. Panneau de commutation à isolation par du fluide comprimé suivant l'une des revendications 1 à 7,
**caractérisé en ce que**
le panneau (8, 8a) de commutation est adapté pour être un panneau d'alimentation d'une génératrice (4) électrique.

9. Panneau de commutation à isolation par du fluide comprimé suivant l'une des revendications 1 à 8,
**caractérisé en ce que**
le panneau (8, 8a) de commutation peut être disposé à l'intérieur d'un ouvrage (1) de type en tour protégeant des intempéries.
